# EUROPEAN PATENT APPLICATION

(11) **EP 3 588 142 A1**
(43) Date of publication of application: **01.01.2020**
(21) Application number: 18179601.2
(22) Date of filing: 25.06.2018
(51) Int. Cl.: G01S 17/93, G01S 7/481, G01S 7/484

(54) **MULTI-WAVELENGTH LIDAR**

(71) Applicant: IRIS Industries SA, 2024 Saint-Aubin-Sauges (CH)
(72) Inventor: Meylan, M. Claude, 2024 Saint-Aubin-Sauges (CH)
(74) Representative: Bovard SA Neuchâtel

(57) **Abstract**

Disclosed is a multi-wavelength Lidar (1) configured to emit and detect short wavelength infrared (SWIR) light comprising an emitter module (10) and a detector module (100). The emitter module (10) comprises light emitters and at least one optical waveguide (30) comprising an array (40) of incouplers (40a), each of said incouplers (40a) facing at least one of said light emitters, said waveguide (30) being configured to guide incoupled portions (42a, 42b, 42c) by internal reflections in said waveguide (30). The waveguide (30) comprises at least one outcoupler (50) configured to couple out of said waveguide (30) at least one illumination beam (1000) comprising at least an outcoupled fraction of said guided portions (42a, 42b, 42c).

The invention is also achieved by a Lidar comprising a detector module comprising at least one detector comprising a GeSn alloy absorbing layer.

There is also disclosed a wearable short wavelength infrared Lidar system (3) comprising electronic and data handling means that are configured to provide information and/or warning signals to the person wearing said wearable short wavelength infrared Lidar system.

## Description

### Technical Field

The invention relates to the field of light Detection and Ranging systems (Lidar). More particularly it relates to a multi-wavelength Lidar comprising optical waveguides.

### Background of the art

One of the drawbacks of existing Lidar systems is due to their use of a single wavelength. This has several consequences. For example, the peak power required to reach long distance is so high that for near proximity reflections the receiver saturates. This problematic was largely overseen for different reasons - the need to rely on well established concepts and technologies, among others, just to speed up the development phase - up to an accident with an automatic car relying on a Lidar in March 2018 that has demonstrated the need for accurate detection at short and long distances at the same time. In parallel, much information has been disclosed in the literature or in patent applications to solve the problems related to single wavelength Lidars and the use of existing detectors such as InGaAs detectors. U.S. Patent Application No. US 20170307736 A1 entitled "Multi-Wavelength Lidar System" (MSL) describes the potential benefits of using multi-wavelength in terms of spatial resolution, refresh rate, power monitoring, immunity against interference and modulation of laser pulses. Other investigations (Gong W. et al., Investigating the Potential of Using the Spatial and Spectral Information of Multispectral Lidar for Object Classification, Sensors, 15, 21989-22002, 2015) using both spectral and spatial information to detect and jointly differentiate objects have shown a higher overall accuracy than what can be achieved using a single-wavelength Lidar, revealing MSL's superiority over single-wavelength Lidar for object differentiation. In addition, MSLs also yields more accurate differentiation results concerning every detected category than passive multispectral imaging with the same bands, highlighting the advantage of three-dimensional data for target detection.

The document US 20170307736 A1 describes a Lidar comprising single-emitter lasers and a wavelength combiner. The system disclosed in US 20170307736 A1 comprises laser sources generating optical beams at different wavelengths transmitted along various paths, whereas a wavelength combiner is used to combine the optical beams, which are not necessarily parallel, but arranged to produce a desired beam profile at target planes in the field of view (FOV) and range of the MSL. Using different wavelengths to produce different FOVs and distance ranges in a compact system can help overcome receiver saturation due to close proximity reflections with prior art Lidar systems using, for example, a first wavelength for a long sensing distance and another wavelength at a lower power only for simultaneous proximity measurements. In the configuration of the MSL of US 20170307736 A1, two receivers detect light of different wavelengths independently, whereas each receiver is capable to detect a single wavelength allowing for simultaneous operation of the different laser wavelengths in which the pulse signals from each wavelength overlapped in time. The MSL in US 20170307736 A1 may well function with two wavelengths, but adding more wavelengths would make the system complex and expensive due to the requirements of a multi-wavelength combiner. Thus, there is a need for a more flexible and scalable solution to take advantage of a MLS.

There is also a need for an effective multi-wavelength Lidar that can be immune to interference from other optical sources such as laser pointer or stationary traffic monitoring. In addition, with the large scale deployment of Lidar systems, immunization against interference from other systems becomes critical. And although an encryption system can be envisaged, a multiple wavelength system allows independent use of each wavelength so that if one of them is "locked", another one would still be available to confirm the authenticity of the signal. A multi-wavelength Lidar system is therefore highly required to provide enhanced security and prevent blinding, jamming and spoofing attacks compared to a single wavelength Lidar.

### Summary of the invention

It is an object of the invention to provide a multi-wavelength Lidar allowing improving considerably the reliability and size of prior-art Lidars. It is also an objective to present a multi-wavelength Lidar having wide design flexibility so that the Lidar may be adapted to a wide variety of supports that may have a complex shape and so that the emitter may be located at a distance relative to a virtual emitting area that provides the illumination beam. The multi-wavelength Lidar of the invention is configured to be operable to at least a distance of 200 m relative to said optical emitter, being eye-safe at all distances relative to said Lidar.

In order to achieve this, the multi-wavelength Lidar of the invention comprises an emitter module comprising semiconductor emitters that emit light in several wavelengths. By using at least one optical waveguide the light emitted by said emitters is guided towards at least one outcoupler that is configured to emit at least one light beam comprising light of different wavelengths. In embodiments the Lidar is configured to detect reliably static or moving targets that are located at great distances, such as greater than 50 to 200 m, and at the same time detect static or moving targets that are in proximity of the Lidar, i.e. distances that are less than 50 m, even less than 10 m, even less than 5 m. In embodiments, the Lidar of the invention comprises an innovative highly sensitive detector comprising a short-wavelength infrared (SWIR) absorption layer made of a GeSn alloy.

The invention is also achieved by a Lidar system comprising a housing and/or a belt and/or an armband. The Lidar system comprises electronic and data handling means configured to generate information on the nature and distance of targets facing the Lidar system. The electronic and data handling means may be fixed on a separate support than the support of the Lidar and may communicate with the Lidar by a wireless connection. The Lidar system may comprise at least one housing comprising at least one Lidar, said housing having a volume less than 10 cm³, preferably less than 50 cm³. In embodiments the Lidar system comprises a warning system that is configured to generate, in presence of a target, an alarm signal to the person that wears the Lidar system. The alarm signal may be an acoustic, optical, mechanical or electric alarms system that provides at least a first signal related to the nature of a target and a second signal related to the distance of that object. Additional signals may be generated that give information of the speed and/or direction of said target.

More precisely the invention is achieved by a multi-wavelength Lidar 1 as disclosed in the claims.

### Brief description of the drawings

Embodiments of the invention are now described, by way of example only, with reference to the drawings in which:
- Figure 1 illustrates a perspective view on a multi-wavelength Lidar of the invention;
- Figure 2 illustrates an emitter module comprising three emitter arrays and three outcouplers arranged on a waveguide;
- Figure 3 illustrates a cross section of a waveguide in a horizontal plane;
- Figure 4 illustrated an illumination pattern realized in a far-field plane by a multi-wavelength Lidar in operation;
- Figure 5 illustrates a curved waveguide comprising a plurality of waveguide portions comprising emitters each connected optically with an output coupler;
- Figure 6 illustrates a illustrates a curved waveguide comprising a first plurality of waveguide portions that are configured to illuminate targets positioned at great distances and a second plurality of waveguide portions configured to illuminate targets positioned at short distances to the Lidar;
- Figure 7 illustrates the projected light beams provided by the Lidar comprising an emitter module embodiment of Fig. 6;
- Figure 8 illustrates an emitter module comprising a fiber bundle, each fiber of the bundle being associated optically to an emitter;
- Figure 9 illustrates a cross section view of an embodiment of Fig. 8, in a horizontal plane;
- Figure 10 illustrates an detector module comprising an angular dispersion layer;
- Figure 11 illustrates a detector module comprising a wavelength dispersion layer and an angular dispersion layer;
- Figure 12 illustrates a detector waveguide comprising an incoupler and detector array of which each detector faces an outcoupler;
- Figure 13 illustrates a waveguide comprising an embossed microlens facing a microstructured reflective incoupler;
- Figure 14 illustrates a waveguide comprising an embossed cylindrical microlens facing a rectangular shaped microstructured reflective incoupler;
- Figure 15 illustrates an emitter module comprising a plurality of waveguides comprising each an emitter, the emitter comprising a single output coupler facing a cylindrical lens;
- Figure 16 an emitter module comprising incouplers configured so that the emitted light from an emitter does not intersect with the area facing any other emitter, the emitter module in the figure comprising further gratings;
- Figure 17 illustrates a monolithic emitter module comprising integrated waveguides on one of its surfaces;
- Figure 18 illustrates a detector waveguide comprising an angular dispersive incoupler;
- Figure 19 illustrates a detector waveguide comprising an wavelength dispersive incoupler;
- Figures 20 - 23 illustrate variants of Lidar configurations;
- Figure 24 illustrates a cross section of a detector array;
- Figure 25 illustrates a cross section of a CMOS readout layer of a detector;

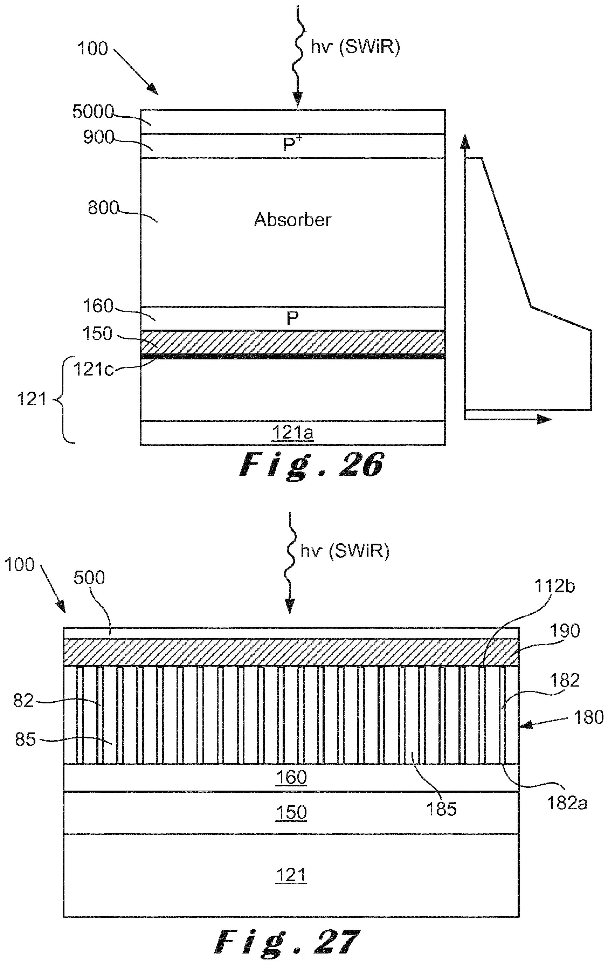

- Figure 26 and Figure 27 illustrate other cross section of a detector array;
- Figure 28 illustrates a Lidar comprising a dome comprising an array of emitter and detector modules;
- Figure 29 illustrates an emitter module comprising an array of detectors each detector being optically associated with a waveguide;
- Figure 30 illustrates a top view on a portion of a detector module comprising a tapered waveguide;
- Figure 31 shows an example of a detector module comprising an array of tapered waveguides;
- Figure 32 illustrates a Lidar system comprising a support and a communication system configured to send information signals relative to the environment of a person wearing the Lidar system;
- Figure 33 illustrates an exemplary realization of an emitter module;
- Figure 34 illustrates an embodiment comprising a plurality of tapered waveguides;
- Figure 35 illustrates a two-dimensional tapered emitter waveguide;
- Figure 36 illustrates a Lidar configuration comprising two emitter waveguides and a detector module;
- Figure 37 illustrates a Lidar comprising a plurality of emitter waveguides and a detector, arranged on a substrate.

### Detailed description and embodiments of the invention

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes. The dimensions and the relative dimensions do not correspond to actual reductions to the practice of the invention. Moreover, the terms top, under, to the side and the like are used for descriptive purposes and not necessarily for describing relative positions. The terms so used are interchangeable under appropriate circumstances and the embodiments of the invention describes herein are operable in other orientations than described or illustrated herein.

It is to be noticed that the term "comprising" in the description and the claims should not be interpreted as being restricted to the means listed thereafter, i.e. it does not exclude other elements. So, the scope of the expression " a device comprising first means and second means, should not be limited to devices consisting only of said first and second means, it only means that in respect if the invention the relevant components of the device are said first and second means.

Reference throughout the specification to "an embodiment" means that a particular feature, structure or characteristic described in relation with the embodiment is included in at least one embodiment of the invention. Thus appearances of the wording "in an embodiment" or "in a variant" in various places throughout the description are not necessarily all referring to the same embodiment, but several. Furthermore, the particular features, structures or characteristics may be combined in any suitable manner, as would be apparent to a skilled person from this disclosure, in one or more embodiments. Similarly, various features of the invention are sometimes grouped together in a single embodiment, figure or description, for the purpose of making the disclosure easier to read and improving the understanding of one or more of the various inventive aspects. Furthermore, while some embodiments described hereafter include some but not other features included in other embodiments, combinations of features if different embodiments are meant to be within the scope of the invention, and from different embodiments. For example, any of the claimed embodiments can be used in any combination. It is also understood that the invention may be practiced without some of the numerous specific details set forth. In other instances, not all structures are shown in detail in order not to obscure an understanding of the description and/or the figures.

The invention is achieved by a multi-wavelength Lidar 1 configured to emit and detected short wavelength infrared (SWIR) light comprising an emitter module 10 and a detector module 100, said emitter module 10 comprising an emitter platform 2 and an emitter 20 comprising at least two light emitters configured to emit each a light beam having a wavelength in a wavelength range between 0.9 µm and 3 µm, said detector module 100 comprising at least one detector 110 configured to detect light having a wavelength in said wavelength range. Said emitter 20 may be a plurality of emitter arrays or an emitter array comprising individual emitters 22a-22n that are preferably semiconductor light emitters but may be any type of emitter such as emitters based on or comprising organic materials. Preferably the emitters of the emitter module 10 are lasers but may be super-luminous LEDs as further described.

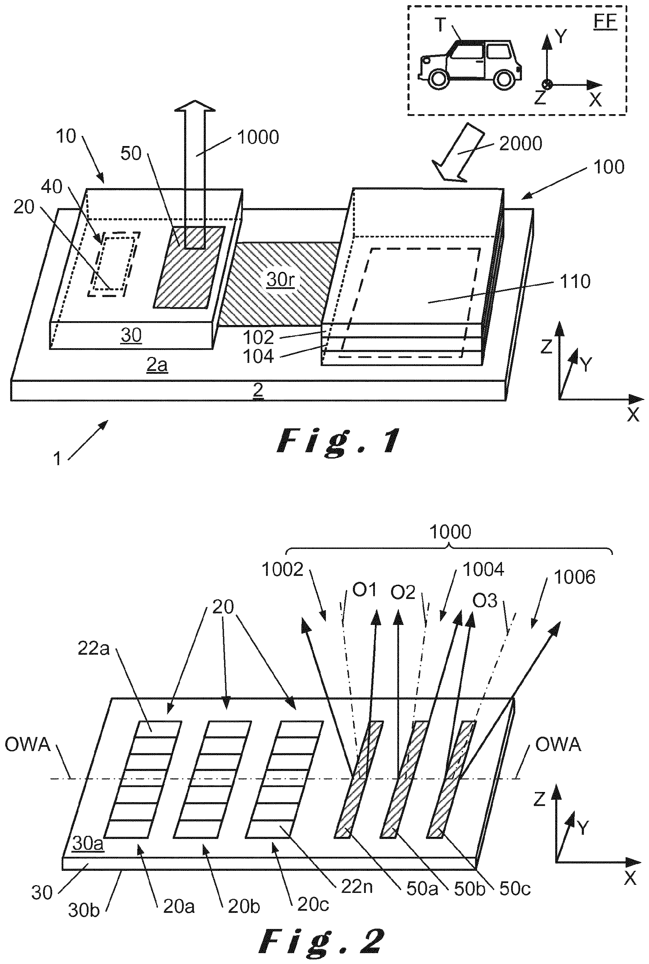

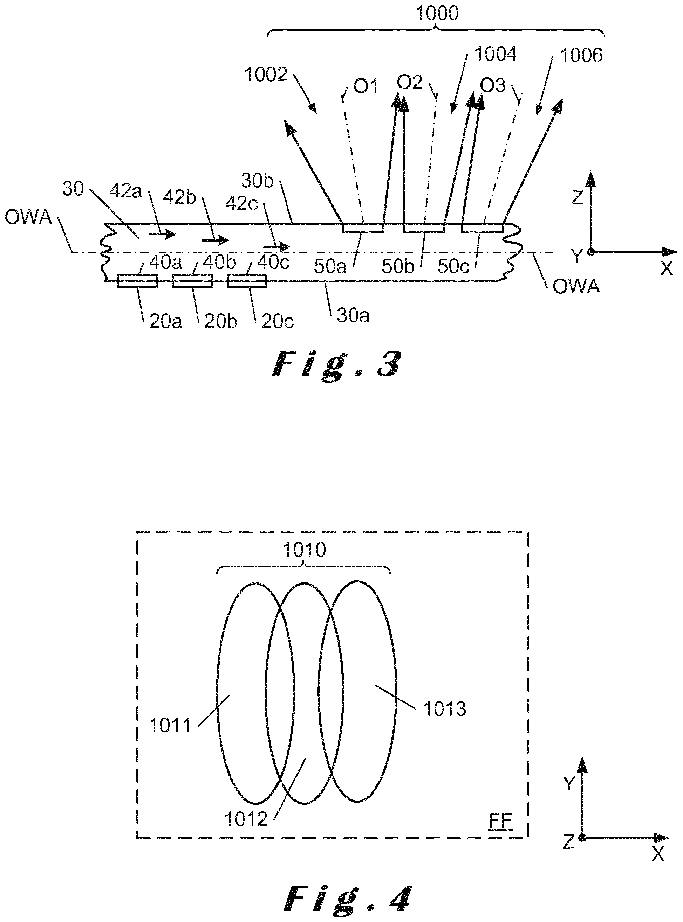

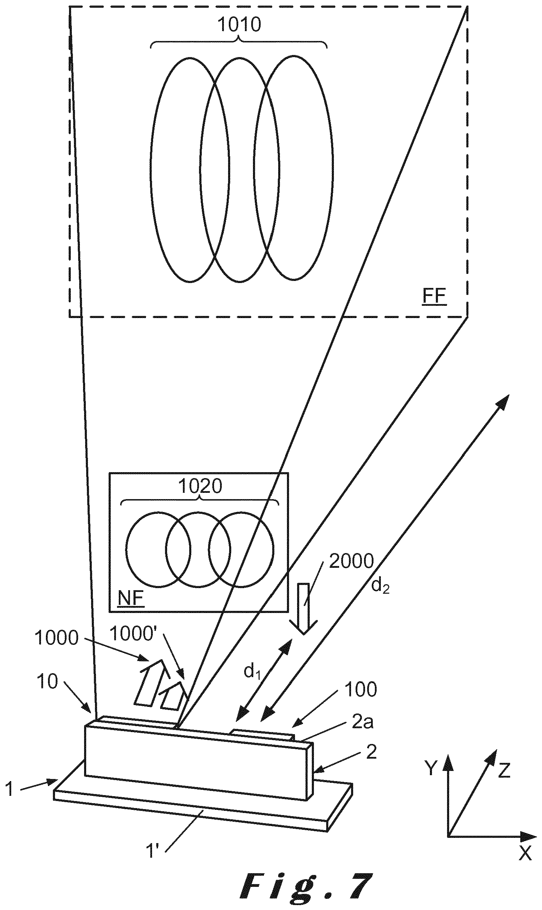

The detector platform 2 defines an orthogonal reference axis system X-Y-Z. For convenience a Z-axis is defined in the direction perpendicular to said platform 2, defining a X-Y plane. The plane Y-Z defines a longitudinal or vertical plane and the plane X-Z defines a horizontal plane. The wordings "horizontal" and "vertical" and the X-Y-Z axes have no relation with the direction of gravity. It is understood that a longitudinal plane means any plane parallel to the Y-Z plane. A lateral plane, such as the planes FF, NF in Fig. 7, is defined as a plane substantially parallel to said platform 2 so to the X-Y plane. The waveguide 30 defines an optical waveguide axis OWA as illustrated in Figs. 2 and 3.

The emitter module 10 of the Lidar 1 comprises at least one optical waveguide 30 comprising an array 40 of light input couplers, also defined as input couplers or incouplers 40a-40n, each of said incouplers 40a-40n facing at least one of said emitters 22a, 22n and are configured to incouple, in operation of said Lidar 1, into said waveguide 30 at least a portion 42a-42n of the light beams emitted by said emitters 22a-22n, said waveguide 30 being configured to guide said portion 42a, 42b by internal reflections in said waveguide 30. The number n of emitters may be 2 or may be several thousand, for example 5000 or 10000 or any other number.

The waveguide 30 comprises at least one light output coupler, also defined as output coupler or outcoupler 50 configured to couple out of said waveguide 30 at least one illumination beam 1000 comprising light provided by said emitters.

The use of waveguides in the emitter module 10 and/or the detector module 100 has several advantages, as it allows to provide a multi-wavelength Lidar 1 that may be configured so that the emitting surfaces of the Lidar may be arranged on a 3D shaped object. It also allows to position the emitters away from the detectors so that optical crosstalk can be avoided, for example by placing the emitter on the backside of a platform to the opposite side of the detector. It also allows to configure the Lidar to realize a plurality of predetermined emitted beams that may have different beam characteristics as further described. Furthermore, in embodiments monolithic integrated emitter and detector modules may be realized having a wide design flexibility as further described.

In an embodiment at least one of said emitters is a one dimensional or two-dimensional emitter array 20. Fig. 2 illustrates an emitter module comprising an emitter 20 comprising three linear emitter arrays 20 a,b,c comprising n emitters 22a-22n, and three outcouplers 50 a,50b, 50c . At least one of said outcouplers 50a, 50b, 50c couples out of said waveguide at least one light beam comprising a fraction of light provided by all the light emitters 22a-22n. In variants the output coupler or output couplers may outcouple only light provided by some predetermined light emitters 22a-22n.

In embodiments the Lidar 1 is configured to project at least one illumination light beam 1000 that has a fan-shape defined in a horizontal and/or vertical plane. The illumination light beam 1000 may comprise a plurality of light beams 1002, 1004, 1006 having central optical axes O1, O2, O3 as illustrated in Figs.2, 3-7. The illumination beams 1000, 1002, 1004, 1006, may have any angular distribution defined in a longitudinal vertical plane Y-Z or in a lateral vertical plane X-Y. Typical apertures of the illumination beams 1000, 1002, 1004, 1006, are lower than 45°, preferably lower than 20°, more preferably lower than 5°. The Lidar 1 may be configured to project at short and/or great distances a light beam 1010 that is composed of a plurality of continuous or partially overlapping elliptical light distribution shape 1011, 1012, 1013 ,defined in a virtual lateral projection plane FF, NF, as illustrated in Figs. 4 and 7. Other light distributions may be realized such as substantial rectangular shape, ring shapes. It is also understood that several embedded light spots may be realized in a virtual lateral projection plane FF, NF, at several distances relative to the Lidar 1.

In an embodiment at least one of said emitters 22a-22n is a vertical cavity surface emitting laser (VCSEL).

In an embodiment at least one of said emitters 22a-22n is a vertical external cavity surface emitting laser (VECSEL). Different types of emitter arrays are further described in the emitter section.

In an embodiment said emitter module 10 comprises n emitters 22a-22n and m outcouplers 50, m being smaller than n. In operation of said Lidar 1, each of said m outcouplers 50 couples out of said waveguide 30 at least one outcoupled light beam 1001 comprising light provided by at least a fraction of all of said incoupled light beams 42a, 42b, 42c.

In an embodiment at least one of said outcouplers 50 couples out of said waveguide 30 an outcoupled light beam 1001 comprising light provided by less than n emitters.

In an embodiment said emitter module 10 comprises n emitters 22a-22n and m outcouplers 50, m being greater than n. In operation of said Lidar 1, each of said m outcouplers 50 couples out of said waveguide 30 at least one outcoupled light beam 1000 comprising light provided by at least a fraction of all of said incoupled light beams 42a-n. It is understood that some incouplers 40a-40n may incouple light provided by at least 2 emitters, meaning that the number of incouplers must not be necessarily the same as the number of emitters. Also, it is also understood that not all incouplers 40a-40n must be of the same type. For example a first plurality of incouplers may be a diffraction grating and a second plurality of incouplers may be a plurality of embossed prism or other microstructures.

In an embodiment at least one outcoupler 50 couples out of said waveguide 30 an outcoupled light beam 1000 comprising light provided by the incoupled light provided by less than n emitters.

In advantageous embodiments the outcoupler 50 may comprise a plurality of different oriented gratings. For example a grating outcoupler may comprise m x m gratings, each grating being configured to couple out at least a portion of guided light provided by at least one waveguide optically associated with the outcoupler 50. In an example m is equal to 4. In variants an outcoupler may have a circular shape so that different waveguides may be arranged to that outcoupler 50, for example 10 waveguides 30 may be arranged in a circular configuration having the center of said outcoupler as symmetry center. In variants an outcoupler may be a combination of micro-optical elements such as an array of microlenses being arranged in series and/or in parallel with a grating array. It is also understood that polarization selective structures or componants may be part of said outcoupler 50.

In variants metasurfaces may be integrated on or into the waveguide and in particular be part of said outcoupler. Metasurfaces allow to provide optical filtering and/or beam-shaping functions such as focusing or diverging functions and may be arranged in or on said incouplers and/or said outcouplers. Reference is made here to the document WO2016/107849 in which a lens-free imaging device is described.

For autonomous vehicles, in advantageous embodiments, said emitters emit light have a wavelength between 1.4 µm and 1.8 µm. In a preferred embodiment the wavelengths of the emitters are between 1.5 and 1.7 µm. For other applications, the range may be different, but always in the SWIR spectral range, preferably in one of both atmospheric windows in the SWIR range, between 1.5 µm and 1.8 µm, and between 2.2 µm and 2.4 µm.

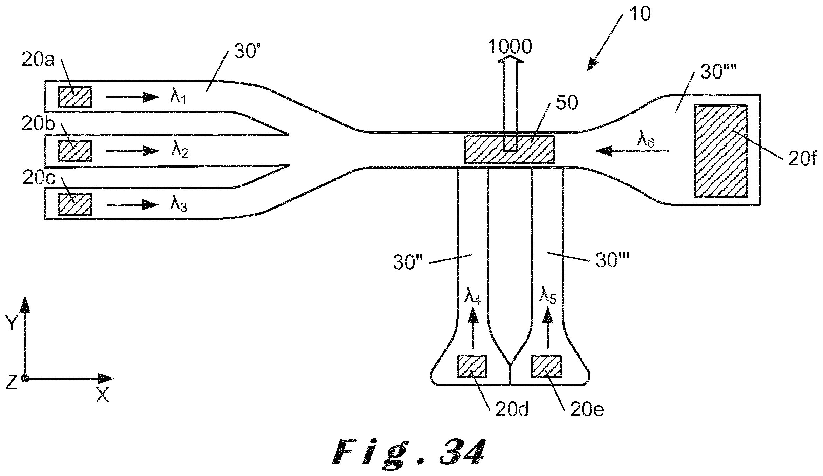

In an embodiment, illustrated in Fig. 2 and Fig. 3, at least one of said incouplers 40a, 40b, 40c and/or said outcouplers 50a, 50b, 50c is arranged to a lateral side of a flat waveguide 30 and is substantially parallel to the longitudinal optical axis OAW of said waveguide 30. Grating couplers may have any shape and may comprise a plurality of different portions. For example, in an embodiment illustrated in Fig. 34, and explained further, the outcoupler 50 may be a chess-board shaped arrangement of grating elements, each element being configured to couple out a predetermined fraction of at least one of the guided light beams. In variants, incouplers and outcouplers may be arranged to any side of the waveguide 30, even to an edge or lateral side.

In an embodiment said waveguide 30 comprises at least one optical fiber 301.

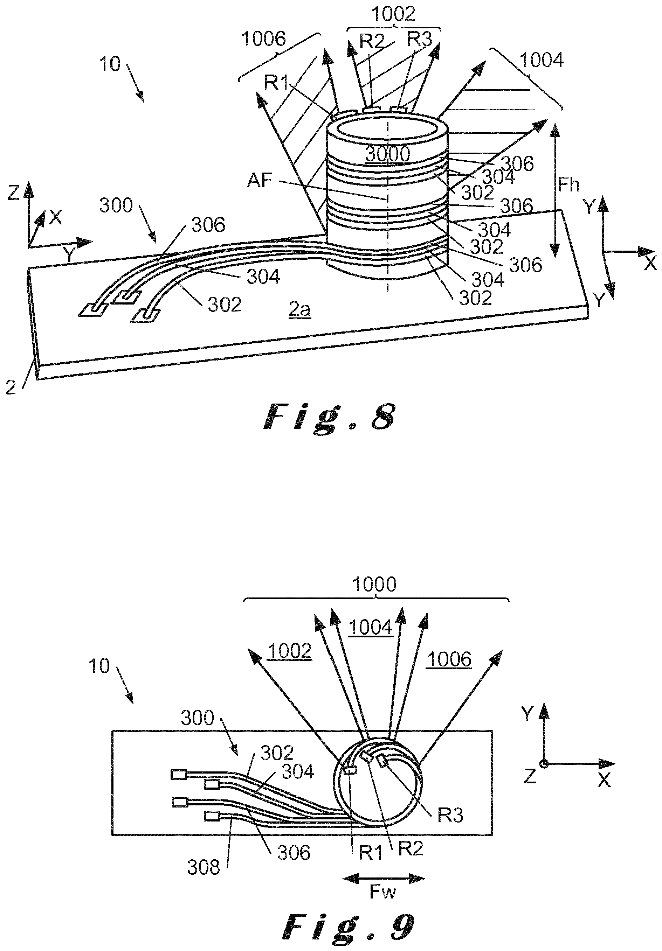

Figs. 8 and 9 illustrate embodiments of an emitter module 10 comprising a fiber bundle 300 comprising a plurality of fibers 302, 304, 306, 308. A fraction of the length of the fibers is fixed around a support having an axis substantially orthogonal to said emitter platform 2. In variants, the incoupler may be one of the fiber extremities, as illustrated in Fig. 8, or may be an incoupler realized to a side of the optical fiber as illustrated in Fig. 9. In the embodiment of Fig.8 and 9 the light is coupled out laterally of the fibers 302-304. The different outcoupled light beams 1002, 1004, 1006 may have optical axes that are not parallel and which have different apertures in as well a lateral or horizontal plane. It is understood that the fiber bundle 300 may be adapted so as to emit light in any direction in a X-Y plane for example covering an angle of more than 180°, up to 360°. The Lidar 1 may comprise a number of waveguides so as to generate a great number of light beams, for example more than 10, preferably more than 20 light beams that have each an angular aperture in the X-Y plane of less than 2°, preferably less than 1°.

Coupling light in or out an optical fiber is known to the skilled person and is not described here.

In embodiments the emitter module 10 may comprise at least one light intensity reference detector, such as illustrated in the embodiment of Fig. 8 and Fig. 9. In other variants, at least one light intensity reference detector may be arranged in the detector module 100 and light provided by the emitters 20 may be provided to said light intensity reference detector by a dedicated reference waveguide 3 connecting optically said emitters and said detector module, as illustrated in Fig. 1.

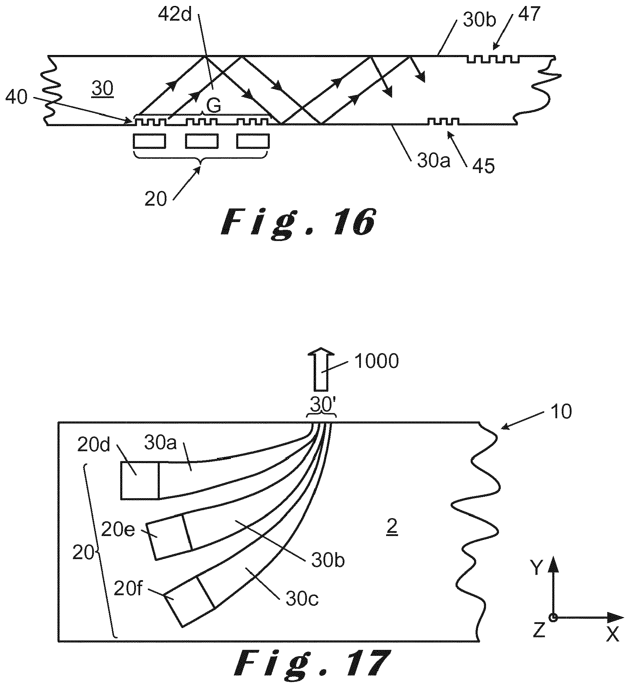

In an embodiment at least one of said waveguides 30 is monolithically integrated on or in said emitter platform 2, as illustrated in Fig. 17. The figure 17 shows only a projected top-view and does not show the position of the emitters in the direction of the z-axis. In a configuration such as the one illustrated in Fig. 17 the outcoupler is defined as the light emitting surface 30' of the emitter module 10, being the plurality of exit surfaces of the monolithically integrated waveguides 30a, b, c.

In an embodiment said platform 2 is made in silicon (Si) and/or said waveguide 30 is at least partially made of SiO₂.

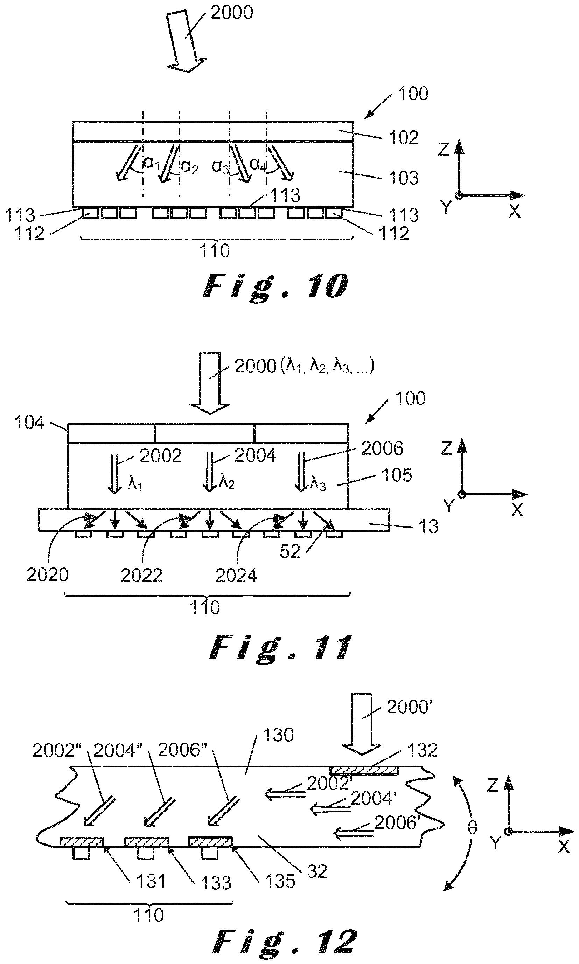

In an embodiment said detector module 100 comprises a light beam redirecting layer 102, as illustrated in Fig. 10 and/or comprises a wavelength dispersion layer 104, illustrated in Fig. 11.

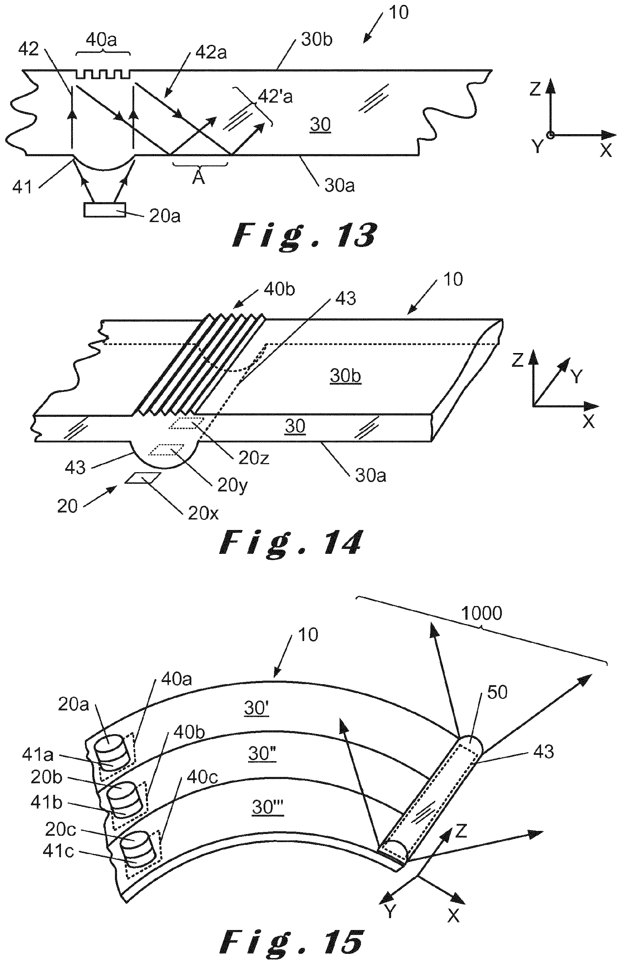

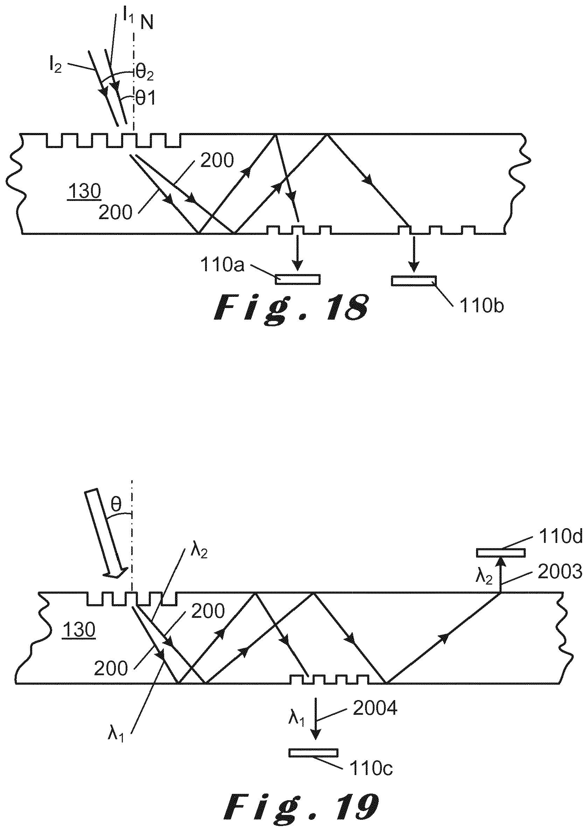

In variants a spacer layer 103, 105 may be arranged between said light beam redirecting layer 102 and/or wavelength dispersion layer 104. In variants a detector waveguide may be arranged in said detector module. In an embodiment illustrated in Fig. 11 and Fig. 12 the detector waveguide 130 may comprise at least one incoupler 132 and a plurality of outcouplers facing the detector elements 110. In advantageous embodiments said detector waveguide 130 is configured as said light beam redirecting layer 102 and/or wavelength dispersion layer 104, as illustrated in Fig. 18 and Fig. 19. Fig. 14 shows how an incident light beam I1 having an incidence angle θ1 is directed to a predetermined detector 110a. Another incident light beam I2 having an incidence angle θ2 is directed to another predetermined detector 110b.

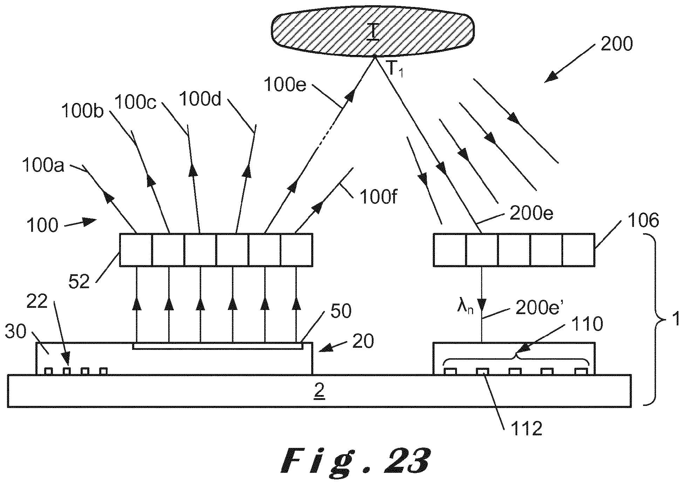

Fig. 19 shows how an incident light beam I1 having an incidence angle θ, comprising light comprising two beams having a different waveguide, is split so that a first beam having a first wavelength λ1 is directed to a first detector 110c and a second beam having a second wavelength λ2 is directed to a second detector 110d. Fig. 23 illustrates a Lidar 1 wherein each detector element is in optical communication with a predetermined emitter. Means may be provided to synchronize predetermined detector elements 112 with predetermined emitters 22. As illustrated in Fig. 23 a predetermined emitter 22 may be in optical communication with a predetermined light beam path 200e'.

Such configurations allow providing a detector module 100 arranged to determine the distance and 3D shapes of a target facing the Lidar 1. In order to achieve this synchronization means have to be implemented between the emitter and the detector. Such synchronization means are known to the skilled person and are not described herein. In variants a plurality of detector elements may be arranged to any side of the detector waveguide 130.

In an embodiment the emitter waveguide 30 of the emitter module 10 is a single waveguide comprising said detector waveguide 130. In embodiments said emitter modules comprises a plurality of waveguides of which at least one waveguide comprises said detector waveguide 130. It is also understood that in such a configuration said detector waveguide 130 may comprise outcouplers that couple out of said waveguide 130 a fraction of the light provided by the emitter 20.

In an embodiment said wavelength dispersion layer 102 and/or said light beam redirecting layer 104 is a waveguide comprising a plurality of incouplers and a plurality of outcouplers, one of said outcouplers facing at least one of said detector elements 110.

In an embodiment said detector 110 is a one-dimensional or a two dimensional detector 110.

In an embodiment said Lidar 1 comprises at least one variable focal length optical element arranged in front of said outcoupler 50 and /or in front of said detector module 100.

In an embodiment said variable focal length lens is made with a MEMS technology and is monolithically integrated to said platform 2.

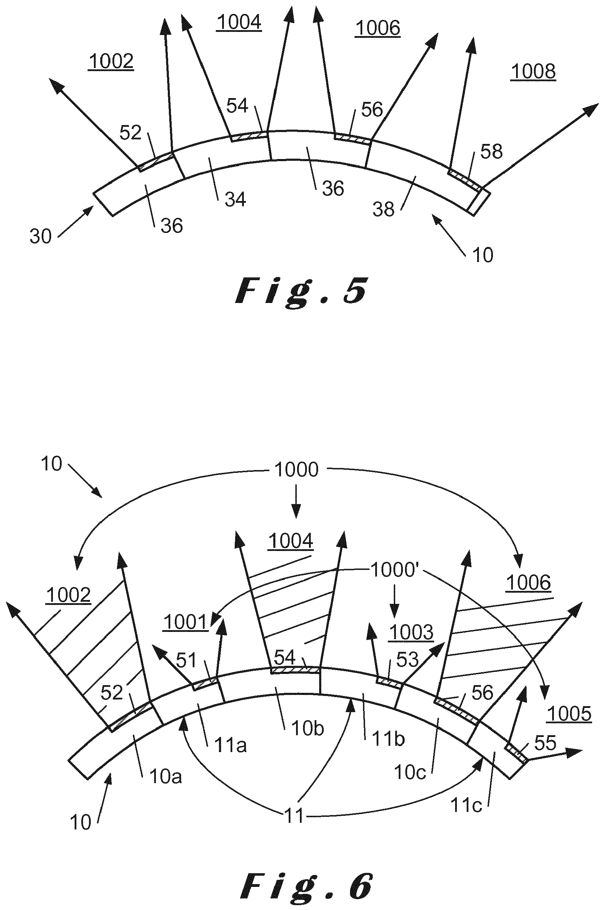

In an embodiment, illustrated in Fig. 5, the multi-wavelength Lidar 1 comprises a waveguide 30 comprising a plurality of waveguide emitter portions 32-38. Waveguide emitter portions 32-38 are defined as portions of said waveguide 30 comprising at least two emitters, facing each an incoupler, and comprising at least one outcoupler 52, 54, 58. By curving such a waveguide 30 a wider span of angles may be obtained for the illuminating light beam 1000. It is understood that, in variants, a flexible waveguide may be dynamically curved by actuation means. For example one extremity of a flexible waveguide, or a fiber, may be configured to be put under oscillation so as to provide at least one scanning illumination beam.

In an embodiment said waveguide emitter portions 32-38 are configured to emit, in operation, different shaped illumination beams 1002, 1004, 1006, 1008. For example the light beams 1002, 1008 in Fig. 5 projected by the outer waveguide portions may have a different vertical and/or horizontal aperture than the light beams emitted by the inner waveguide portions 1004, 1006.

In an embodiment at least two of said waveguide emitter portions 10a, 11a are configured to illuminate, in operation, targets situated at different distances relative to said Lidar 1. Fig. 6 illustrates a variant in which 3 waveguide portions 52, 54, 56 are configured to project a first light beam 1000, comprising light beams 1002, 1004, 1006, at great distances, for example distances d2 greater than 50m , 100m up to at least 200. The variant of Fig. 6 comprises 3 waveguide portions 51, 53, 55 configured to project a second light beam 1000' comprising light beams 1001, 1003, 1005 at short distance, typically distances d1 smaller than 50 m, smaller than 30 m, even smaller than 10 m.

In an embodiment at least one of said incouplers 42 and/or outcoupler 50 is a diffraction grating. In variants the incouplers 42 and/or outcoupler 50 may be prisms or an array of prisms that may be integrated, for example by embossing techniques, at a surface 30a, 30b of said waveguide 30.

In an embodiment at least one of said incouplers 42 and/or outcoupler 50 is a resonating waveguide grating (RWG) as further described. The use of RWGs can be useful to reduce the spectral width of light emitted by a super-luminous LED (SLED). RWGs are further described in the present document.

In an embodiment at least one of said incouplers 42 and/or outcoupler 50 are addressable gratings, for example electrostatic addressable gratings.

In an embodiment micro-optical structures are integrated in said waveguide 30 and configured to shape the emitted light beams of said emitters 22.

In an embodiment said waveguide 30 is a substantially uniform flat optical waveguide 30 and in variants the waveguide may have a varying thickness defined perpendicular to the longitudinal axis OWA of the waveguide 30.

In an embodiment said incouplers 40a, 40b, 40c and outcoupler 50, or a plurality outcouplers, may be situated to opposite sides of said waveguide 30. It is understood that in all embodiments the outcouplers and/or incouplers may be reflective outcouplers and/or incouplers.

In embodiments not shown in the figures, the emitter module 10 may comprise a stack of emitter layers, each emitter layer comprising a plurality of emitters and waveguides. It is also understood that said waveguides may transmit light from one emitter layer to another emitter layer so as to provide, to at least one outcoupler, a mixture of light beams provided by at least a portion of incoupled light beams in said waveguides.

This may be achieved by micro-technology deposition techniques known to skilled persons in the field and is not further disclosed in details herein.

In an embodiment, illustrated in Fig. 14 at least one of said emitters 20 is a linear emitter array comprising a plurality of emitters 20x, 20y, 20z and a cylindrical lens 43 is arranged between said linear emitter array 20 and said waveguide 30. In the embodiment of Fig. 14 a reflective incoupler 40b is arranged at a surface 30b of the waveguide 30, to the opposite side of said emitter array 20.

### Waveguides

A great number of varieties can be devised to realize optical waveguides suitable for the Lidar 1 of the invention, such as fiber bundles, in glass and/or plastic, as well as the techniques to align, assemble, polish and adapt the extremities of these optical waveguides 2 and/or bundles to specific shapes and geometries. These have been disclosed widely in the literature and will not be further explained herein. Some examples can be found in, for example: US3514351, US3236710, JP19780126315.

The waveguide 30 may be made of a transparent material like glass, quartz or a polymer, preferably a transparent polymer like e.g. polycarbonate which is transparent, Polymethyl Methacrylate (PMMA), which is cheap and melts quickly, or PET, or solgel, etc. A polymer material is advantageously flexible. In variants the waveguide is made of TiO₂. Other suitable materials are Ta₂O₃, SiO₂, HfO₂, ZrO₂, Al₂O₃, Si₃N₄, niobium oxide, scandium oxide, oxynitrides or mixtures thereof may be used.

Waveguides and/or their support or substrate may also be made of amorphous or polycrystalline diamond, or amorphous or polycrystalline silicon (Si). It is understood that the support or substrate of the waveguides may be used to fabricate, or assemble, emitters and/or detectors on them. In a variant the waveguide may be a hybrid waveguide comprising sections made of different materials. For example in an embodiment a first section of the waveguide 30 is made of Si and comprises incouplers and is arranged to the emitters, a second section of the waveguide is made of diamond and a third section is made of Si and comprises at least one outcoupler. The waveguides may be straight or bent waveguide in their plane.

In the case of a flat waveguide 30, its thickness may be between 20 nm and 500 nm, preferably between 500 nm and 10 µm. The waveguide may even have a thickness, defined perpendicular to its plane, up to 1 mm, up to 5 mm or more.

In embodiments the emitter module 10 may comprise an emitter platform 2 on which the emitters 20 are arranged, either by deposition techniques, bonding techniques or any other technique. In embodiments a waveguide or a plurality of waveguides may be realized directly on top of the emitters. The waveguides 20 of the Lidar 1 of the invention may be made of a flexible material but may also be made of dielectric materials such as SiO2 or the like, which are deposited directly by micro-technology deposition techniques on the emitter array 20. In case the waveguiding material is not made up of plastic material, ultrasonic welding techniques may be applied.

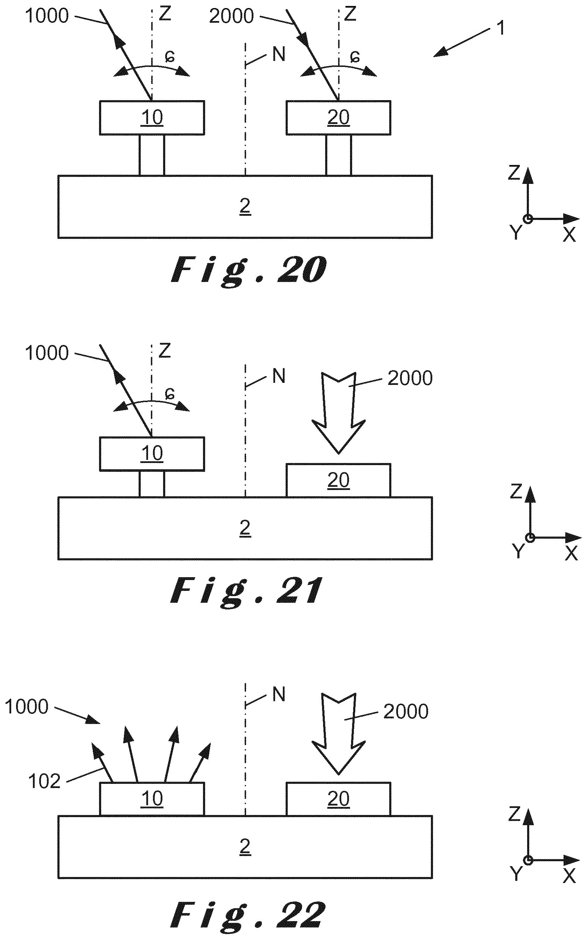

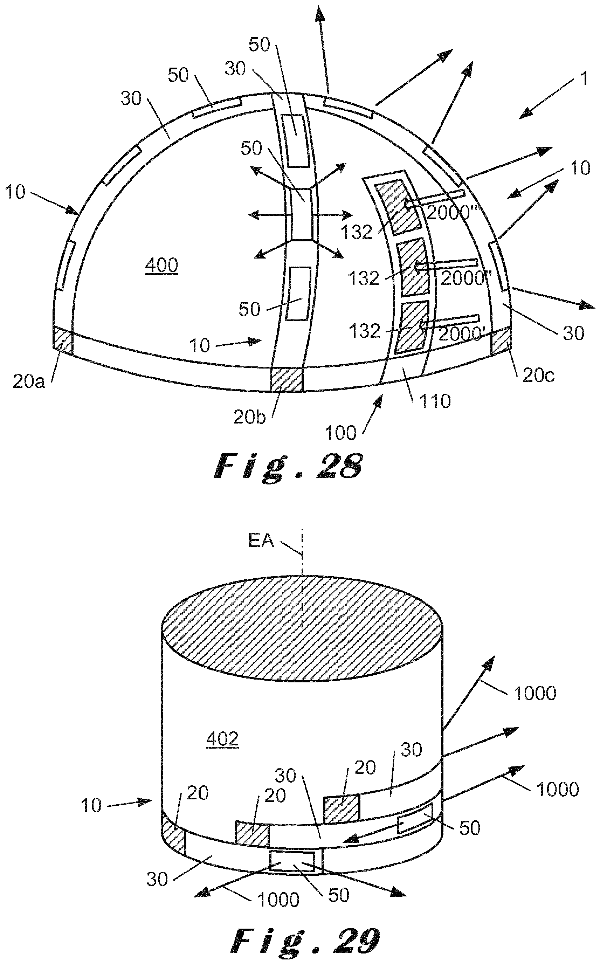

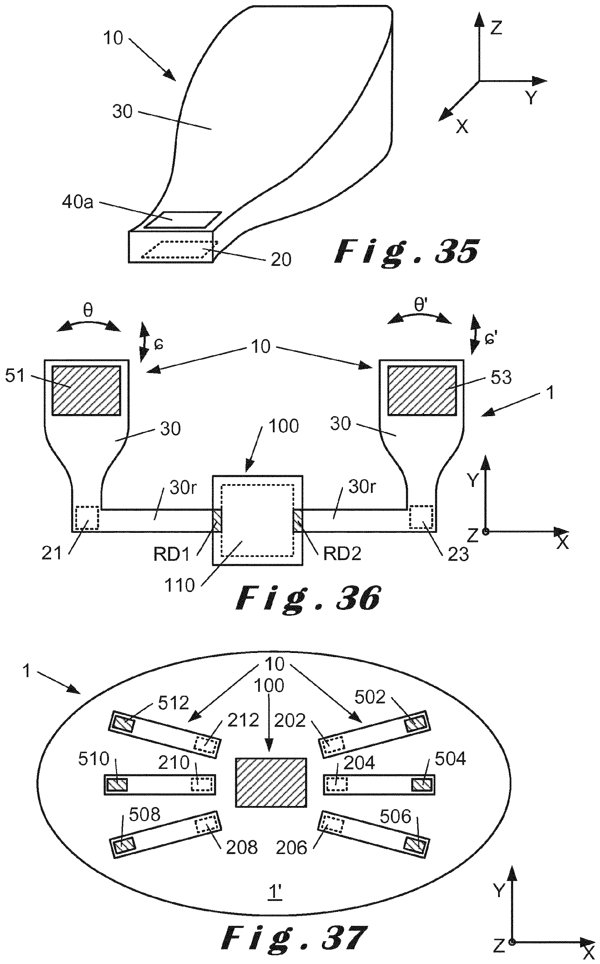

The waveguides of the Lidar of the invention may be flexible waveguides or rigid waveguides or waveguides that are realized on a support by deposition technologies. The use of flexible waveguides allows to adapt the Lidar on a variety of complex shapes supports, such as a dome 400 as illustrated in Fig. 28. A 3D shaped support may comprise a central detector module 100 surrounded by a plurality of emitters and their associated waveguides and outcouplers as illustrated in Fig. 36. In the embodiment of Fig. 28 for example a plurality of emitter modules 10 and an a plurality of detector modules 100 may be arranged so as to cover a wide field of view, possibly a 360° field of view. The wide field of view may comprise a number of partial field of views and these partial field of views may be addressed optically by a sequential addressing of the different emitters. This sequential addressing may be synchronized with predetermined associated detectors or detector arrays 20. In another configuration, illustrated in Fig. 20, an emitter module comprises emitters 20 and their associated waveguides 30 that are positioned on the surface of a cylindrical shaped support 402.

In variants said supports such as said dome 400 and/or said cylindrical shaped support 402 or any 3D shaped object 1' may comprise a rotation axis EA, so that the Lidar may be rotated or oscillated around that axis EA.

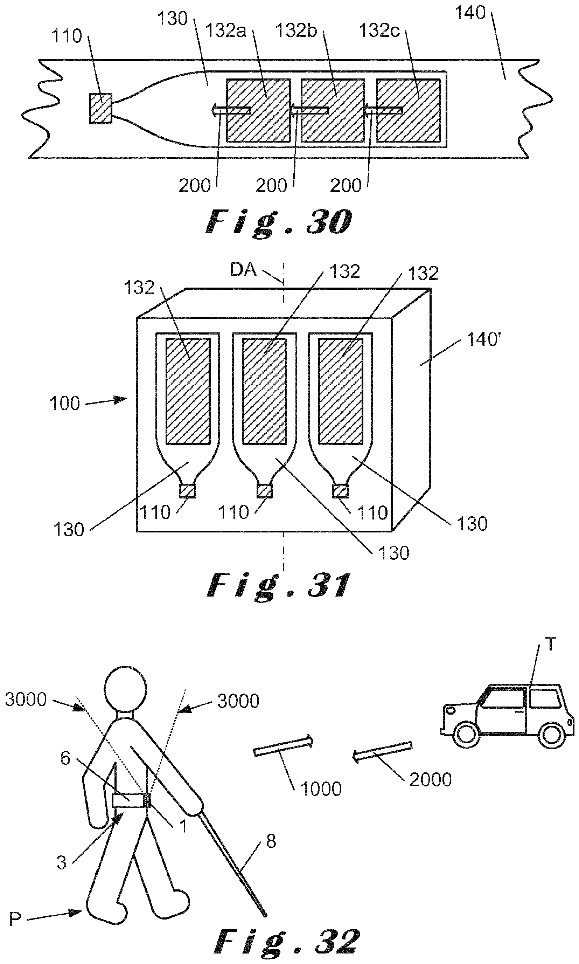

In embodiments the waveguides of the emitter module 10 and/or the detector module 100 may be tapered waveguides arranged on a detector support 140, 140' as illustrated in Figs. 30, 31. The use of tapered waveguides allows to guide incoupled light provided by an incoupler and to direct all the incoupled light 200 to a detector 110 having a smaller dimension than the one of the incouplers. In an embodiment the detector module may comprise a plurality of waveguides, possibly tapered waveguides, arranged on a housing 400 that may comprise a detector rotation axis DA so that the detector module 100 may be rotated or oscillated. A configuration such the exemplary configuration of Fig. 31 allows to improve considerably the light collection without implementing complex and expensive optical components.

In advantageous embodiments any emitter or detector waveguide 30, 130 of the Lidar 1 may be a tapered waveguide. The waveguides may be, for example, tapered in a horizontal X-Z plane or in a vertical Y-Z plane. The waveguides may also be tapered in two dimensions such as in the X-Z plane and in the Y-Z plane as illustrated in Fig. 35. The advantage of using tapered waveguides is due to the conservation of the etendue in any optical system, linked to the Helmholz invariant, not discussed here in detail. By using tapered waveguides, the aperture of the outcoupled light beam 1000 may be a different aperture than the aperture of the incoupled light beams. For example if the width of the emitter array, defined in a X-Y plane is larger than the width of the outcoupler, the outcoupled light beam has a larger aperture. On the opposite, if said width is smaller than the width of the outcoupler, the outcoupled light beam will have a smaller aperture. This effect may of course be combined by the effect of the outcoupler that may be designed also to enlarge or diminish the outcoupled aperture.

It is understood that tapered waveguides may be configured so as to adapt the apertures in the lateral and longitudinal planes according to predetermined values of the outcoupled light beam. The use of tapered waveguides may thus considerably improve the design flexibility of the Lidar 1. For example multiple and different shaped tapered waveguides may be arranged in an emitter module 10 as illustrated in Fig. 34 showing an embodiment in which 6 different light beams are outcoupled by an outcoupler. The different light beams may have different wavelengths and/or different optical beam shapes. In variants, guided and outcoupled light beams may be polarised light beams.

In a variant the waveguides of the emitter and/or detector module may be a two dimensional tapered waveguide as illustrated in Fig. 35. Two dimensional tapered waveguides may be useful to couple light into or out of optical fibers.

In variants at least one of the lateral walls of the waveguides, defined as the walls of the waveguides orthogonal to said X-Y plane, may be coated with a cladding layer and/or a metallic layer.

The waveguides 30 may also comprise optical active elements or structures such as an acousto-optic modulator or other optical active elements that may modify the characteristics of the guided and /or outcoupled and/or incoupled light beams.

In variants, the Lidar may comprise more than 2 waveguides that may be arranged so that the individual waveguides are not parallel and may be configured so that they make different angles relative to said outcoupler 50 as illustrated in an X-Y plane top view of Fig. 36, showing a configuration adapted to provide an illumination beam 100 comprising light beams having 6 different wavelengths λ1-λ6.

It is also understood the emitter and/or detector modules 10,100 may comprise waveguides that are arranged in different horizontal planes.

The waveguides used in the Lidar 1 may have any dimension (thickness, width, length) and may be made by any material that guides SWIR light. In some configurations the thickness of the waveguide may be greater than 1 mm and its length may be more than 10 mm even in the case of monolithically integrated waveguides. In the case of flat flexible waveguides, or in the case of fiber optics, the length of the waveguide, i.e. the distance between the incouplers and outcouplers measured along the waveguide, may exceed 1 meter.

More details of the Lidar are now described.

### Input and output couplers

Numerous basic publications in the literature focus on the physics, the fabrication technologies and the applications of gratings such as:
- Born M./ Wolf E. "Principles of Optics", Pergamon Press, Oxford, 1993.
- Petit R. "Electromagnetic Theory of Gratings", R. Petit ed., Springer Verlag, Berlin 1980.
- Schnieper M. et al. "Application and fabrication of subwavelength gratings" in Diffractive Optics and Micro-optics, Technical Digest, Optical Society of America, Tucson 2002, p. 228-230.

Input and output couplers made of diffraction gratings may be manufactured by lithography, embossing techniques or injection molding. During the manufacturing steps of the input and/or output couplers further microstructures may be provided on the waveguides, such as further diffraction gratings 45, 47, illustrated in Fig. 16, that allow to shape the guided light beams, or that may also redirect or split the guided light beams 42a, 42b, 42c.

It is understood that a variety of microlenses and/or microprisms may be adapted or integrated into the waveguide 30.

In embodiments the incoupler and/or outcoupler may be resonant waveguide grating (RWGs) also called guided-mode resonance filter, consisting of a combination of a sub-wavelength grating and a thin film waveguide. Such structures have a multilayer configuration and a basic arrangement comprises a substrate, a thin dielectric or semiconductor waveguide layer and possibly an additional layer in which a grating is formed. A so-called resonance occurs when the incident light is diffracted by the grating and matches a mode of the waveguide. The efficient transfer of wave energy between forward and backward propagations at resonance is due to the relative phase-shift between the incident and the diffracted waves, resulting in destructive and constructive interference of forward and backward propagating waves. The use of RWGs can be useful for example in the case of emitters that are super-luminous LEDs having a broad spectrum, typically 10 nm to 50 nm. The design and simulation of deep grating grooves can be obtained by using the rigorous simulation methods such as the Fourier-Modal-Method (FMM) or the Rigorous Coupled-Wave Analysis (RCWA) which are not described further herein.
One of the main applications of guided mode resonance structures has been the design of filters with very narrow spectral linewidths in reflection and transmission. The bandwidth can be designed to be extremely narrow and of the order of 0.1 nm and may be tuned by parameters such as the grating depth, the duty cycle and the thickness of the waveguide layer.
Wavelength selective filters based on resonant grating waveguide structures are described in: Magnusson R./ Wang S.S. "New principle for optical filters", Appl. Phys. Lett., vol. 61, pp. 1022-1024, 1992). Also, a systematic analysis of resonant grating waveguide structures has been published by Rosenblatt and Sharon:
- Rosenblatt D. et al. "Resonating grating waveguide structures", IEEE J. Quantum Electron., vol.33, nr.11. pp. 2038-2059, 1997;
- Sharon A. et al. "Resonating grating-waveguide structures for visible and near-infrared radiation:", J. Opt. Soc. Am., vol.14, nr.11, pp. 2985-2993, 1997.

It is not necessary that the incoupling of light is realized by a resonance effect. Indeed, efficient coupling of an incident beam into a multimode waveguide 30 may be achieved if the wavefront of the coupled light in the waveguide 30 is able to propagate along a diffracted order, and not along the zero order that is a propagation without diffraction. The coupling structure is periodic and therefore produces diffraction of the incident light beam. Efficient coupling into the waveguide is achieved if only the first and/or the minus first diffraction order is coupled into the waveguide. Alternatively also the second and minus second order diffraction order can be used for efficient coupling. Usually the coupled diffraction order is at least 10 times more intense than any of the other remaining orders in the waveguide 30. It has been shown in the document EP2877884 that, under suitable conditions, light can be coupled with very high efficiencies up to 80% or more into multimode waveguides even if the waveguide is typically thicker than 10 µm, and a thickness of typically a millimeter is possible. Therefore the grating used to incouple light in the waveguide has a width, in the direction of the internally propagated light 42d, so that that the first reflected light beam inside the waveguide is incident outside the grating area (G) of the incoupling gratings, as illustrated in Fig. 16. Such a configuration assures that no interference is realized between the incident light coupled into the grating and any partially refracted light beam produced by a light beam inside the waveguide. As no interference is required, the grating thickness can be much larger that the temporal coherence length of the incidence light without lowering the coupling efficiency. The coupling efficiency is very important since it is directly linked to the light power management of the Lidar 1 that integrates the waveguide 30; a high efficiency reduces the required optical input power and hence the overall power consumption. Because only one diffraction order is able to propagate in the waveguide, the wavefront of the light is very efficiently diffracted.

Reference is made here to the document EP2877884 in which refractive enhancement layers are described made of a high refraction index material, which considerably improve the in- and output coupling efficiency of the in-and output couplers. Such a material may be zinc sulfide (ZnS), hafnium oxide (HfO₂), titanium dioxide (TiO2), tantalum pentoxide (Ta₂O₅), Zirconium dioxyde (ZrO₂), AlN, Al₂O₃ or ZnO or any combination of these materials. Such materials are easy to use. For example, the coating may be performed directly on the grating with methods well known to the skilled person in the art.

It is understood that in all embodiments of the invention, at least a portion of the emitted, guided and outcoupled light may be polarized light.

The outcouplers and incouplers of the emitter and/or detector modules 10, 100 must not be necessarily by structured outcouplers but may be a predefined area of the waveguide, which is then called an incoupling or outcoupling area. In embodiments, the optical beam characteristics of the guided light in the waveguides 30, 130 may be modified by lateral grating structures integrated on or in the waveguides, so that a grating or any other structure is not necessary at said incoupling and/or outcoupling areas. In a variant said incoupling and/or outcoupling area may be a wedged area of the waveguides 30, 130.

### Detectors

The detector 110 of detector module 110 of the Lidar of the invention is now described in more detail.

Examples of a detector 100, which is part of the detector module 100 of the Lidar of the invention, have been proposed by the Applicant in international applications PCT/EP2017/079964 and PCT/EP2018/050785, the content of which is incorporated herein in their entirety.

Referring to Figs. 20-25, embodiments are illustrated of said detector 110 comprising a readout wafer 121 comprising a CMOS readout layer 121a, and a SWIR absorbing layer 80 that is separated from said readout layer 21a by a buffer layer 160. The detector 110 comprises between said buffer layer 160 and said readout layer 121a a p-n junction 121b.

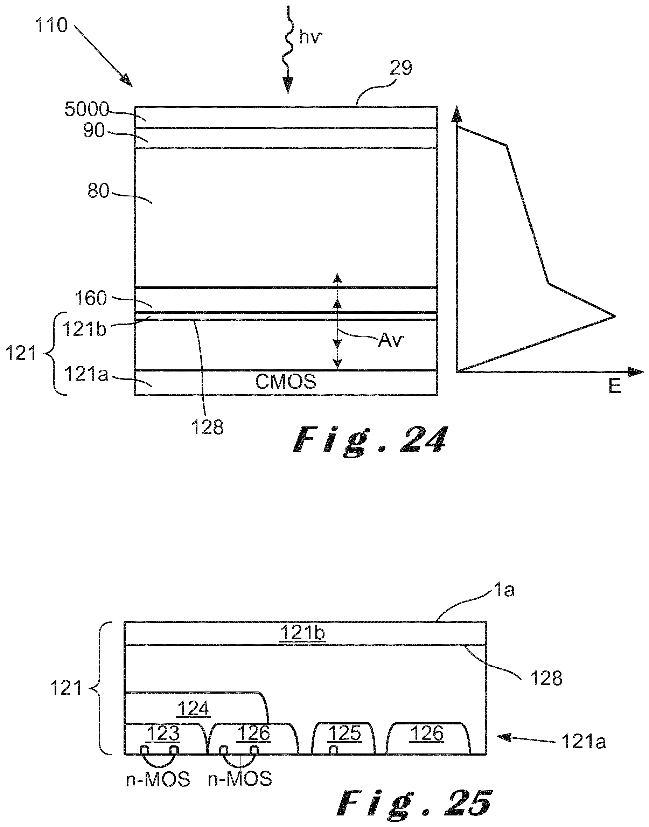

A detector may be a detector array 110 and may comprise a single avalanche photodiode or, in embodiments, an array of avalanche photodiodes. Fig. 25 shows a single pixel of a detector array 110 arranged on, or integrated in, the platform 2 of the invention. The detector 110 may be configured to operate as a single photon detector or a single photon detector array.

In embodiments the SWIR absorber layer 180 of said detector 110 is made of a GeSn alloy of which several variants are described further. In embodiments said emitter 10 may also comprise a GeSn alloy layer and may be the light emitting layer of at least one of said emitters.

In a preferred embodiment said absorbing layer 180 is made of Ge₁₋ₓSnₓ.

In variants said absorbing layer 180 has a Sn content x which is higher than 0.03 and lower than 0.12.

In another advantageous embodiment said absorbing layer 180 is made of a SiₓGe_{1-x-z}Sn_{z} alloy.

Preferably, the Si content x, in a SiₓGe_{1-x-z}Sn_{z} absorbing layer 180 is higher than 0.06 and lower than 0.2.

In embodiments of a SiₓGe_{1-x-z}Sn_{z} absorbing layer 180, the Sn content z is higher than 0.02 and lower than 0.1.

In embodiments said p-n junction 121b is situated at the interface of said buffer layer 60 and said CMOS readout wafer 21.

In embodiments said p-n junction 121b is situated at least partially inside said buffer layer 160.

In another embodiment said p-n junction 121b is situated at least partially inside said readout layer 20.

Advantageously said buffer layer 160 is made of Ge₁₋ₓSnₓ and has a Sn content x between 0.00 ≤ x ≤ 0.03.

In a preferred embodiment said buffer layer 160 is realized by sputter epitaxy. Advantageously, said buffer layer 160 may be realized by reduced-pressure chemical-vapor deposition.

In an embodiment, the material constituting said absorbing layer 80 is configured as a plurality of rods aligned substantially in a direction perpendicular to said buffer layer 160.

In an advantageous embodiment said absorbing layer 180 is monolithically integrated to a readout wafer comprising said CMOS readout layer 121a and wherein a recrystallized intermediate layer is situated at the interface of said absorber wafer, comprising said absorber layer 180, and said CMOS readout layer 121a.

### Platform

The Lidar may be realized on a platform using SOI technology allowing to integrate monolithically the emitter module and the detector module. In an embodiment electronic circuits comprising preprocessing electronic components may be integrated on said platform that is made preferably in a semiconductor material, preferable silicon (Si). The emitters and the waveguides of the Lidar may be made also by using microtechnology techniques such as SOI wafers and their processes.

### Lidar 1 configurations

The Lidar 1 of the invention may be configured according to three basic variants illustrated in Figs. 20-22.

Fig. 20 illustrates a Lidar 1 in which the emitter module 10 and the detector module 100 comprise means so that both of the modules 10, 100 may undergo a rotation or an oscillation that may be synchronized. Fig. 21 illustrates an embodiment wherein the detector module 100 is fixed relative to said emitter platform 2.

Fig. 22 shows a Lidar 1 variant without movable parts.

A Lidar system may comprise an array of possibly different Lidars of the embodiment of Fig. 22, which allows covering a large angular field.

It is understood that the Lidar may comprise different types of beam-shaping optical elements or systems that are configured to shape the outcoupled light beams by the emitter module 10 or the incoming light beams directed to said detector module 100.

Said beam-shaping elements may comprise collimation lenses and/or mirrors and may be static or dynamic elements.

In an embodiment, illustrated in Fig. 36 a detector module 100 may comprise at least one reference detector RD1, RD2 configured to provide a signal proportional to the light intensity emitted by the light emitting elements 21, 23. Fig.36 illustrates furthermore a variant in which the extremities of the waveguides 30 may be rotated in two dimensions.

### The emitters

The emitter 20 of the emitter module 10 comprises at least two light emitters. Said light emitters may be an array of individual light emitters, but may also be a plurality of emitter arrays such as a plurality of VCSEL arrays. The wording emitter has to be understood broadly and covers all possible variations of light emitter in the sense that at least two individual light emitter emit light in two different wavelengths. In embodiments the emitters may be single emitters mounted in an individual housing such as commercially available housings. In variants, emitter arrays bay be single array emitters or two-dimensional arrays. There is no limit to the geometric arrangement of the emitter elements, be it in 2 dimensions or 3 dimensions. Emitters are defined as any suitable light source that include, without limitation, incandescent lights such as a halogen lamp, xenon lamp, arc lamps, and a broadband light emitting diode (LED). In some embodiments a standard or custom filter is used to select predetermined narrowband wavelengths. In some embodiments means may be provided so that the emitters may be used, for example in two different positions, for the Lidar function and in a second position for imaging purposes. Preferably the emitters are suitable narrowband emitters which may be coherent or incoherent light sources such as a narrow band light emitting diode (LED), a super-luminous diode (SLD) or laser-type light emitting diodes or a combination of one of them.

In a preferred embodiment the emitter module 20 comprises 3 VCSEL or VECSEL arrays, each array comprising at least 1000 emitters.

In variants the emitter may comprise at least one single emitter and may comprise at least one emitter array, such as a VCSEL array.

The emitter module may comprise a variety of different types of emitters. For example at least one emitter array may be a VCSEL array and another array may be a VECSEL linear array.

It is understood that there is no limitation in the geometrical layout of the emitter array, such as illustrated in the embodiment of Fig. 17 illustrating different shaped and different oriented emitters and/or emitter arrays.

In an embodiment at least one of the light emitters comprises a GeSn alloy layer.

### Multi- wa velength Lidar system

The invention is also achieved by a Lidar system 4 comprising a housing and/or a belt 6 and/or an armband, as illustrated in Fig. 28. It is understood that the wording "multi-wavelength Lidar" is not limited to Lidars using two to four different wavelengths may also be a hyperspectral Lidar as more than 10 different and continuous wavelengths may be implemented in the Lidar 1. The Lidar system comprises electronic and data handling means configured to generate information on the nature and distance of targets facing the Lidar system. The Lidar system may comprise at least one housing comprising at least one Lidar, said housing having a volume less than 10 cm³, preferably less than 50 cm³. In embodiments the Lidar system comprises a warning system that is configured to generate alarm signals 3000, 3000' to the person that wears the Lidar system 4. The alarm signal may be an acoustic, optical, mechanical or electric alarms system that provides at least a first signal related to the nature of a target and a second signal related to the distance of that object. Additional signals may be generated that give information of the speed and/or direction of said target.

The Lidar 1 of the invention allows to provide a wide range of illumination beams. The illumination beams may be typically, but not limited to:
a) a single illumination beam having an aperture of 20°x1° in either the vertical or horizontal plane;
b) a plurality of illumination beams having a vertical aperture higher than 15° and a horizontal aperture of less than 2°;
c) an array of MxM illumination beams, M being greater than 2, allowing to project a matrix of illumination spots on said virtual surfaces FF, NF;
d) circular distributed illumination beams.

It is the combination of the waveguides and the outcouplers that allow providing a huge design flexibility without using complex and expensive optical components. For some variants the total efficiency, defined as the ratio of the outcoupled light intensity and the incoupled light intensities, defined per emitter, may be higher than 50%, even higher than 70%. For complex configurations the total efficiency may be lower. Therefore the applicant proposes embodiments of the Lidar comprising a detector comprising an absorption layer made of a GeSn as described. This detector has a much higher efficiency than available detectors and may be used in association with lower efficiency emitter/detector waveguides and in or outcouplers.

### Exemplary realization

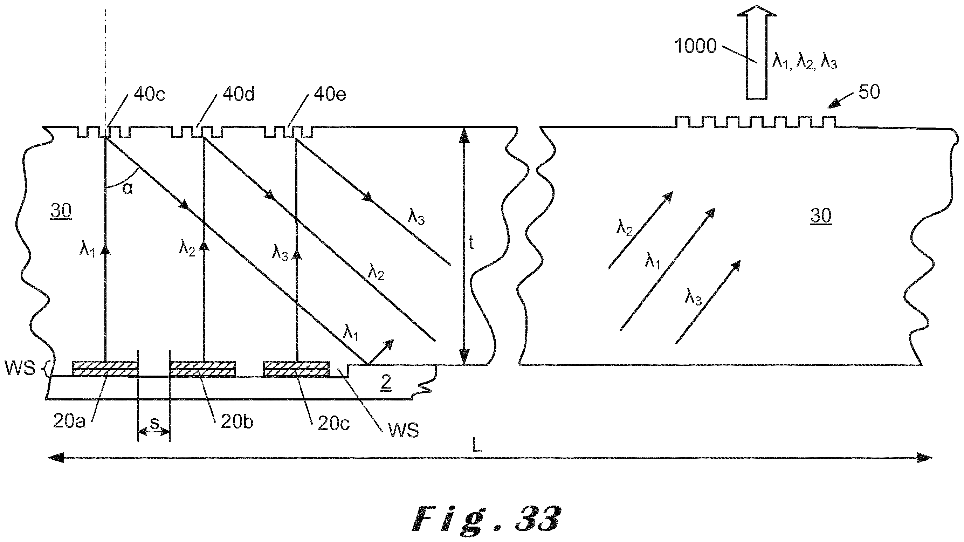

In an exemplary execution the Lidar comprises an emitter module comprising a single waveguide comprising 3 VCSEL arrays, as illustrated in Fig. 33.

The waveguide and the input and output couplers have the following characteristics. The 3 emitters are each a VCSEL array comprising each 16 (4x4) VCSELs:
- the first VCSEL array 20a emits in operation light beams having each a wavelength of 1.4 µm;
- the second VCSEL array 20b emits in operation light beams having each a wavelength of 1.5 µm;
- the third VCSEL array 20c emits in operation light beams having each a wavelength of 1.55 µm.

The apertures of the emitted light beams of the individual emitters is between 0.10 and 0.20, preferable 0.15. The lateral dimensions, defined in a X -Y plane, of each of the VCSEL arrays 20a, 20b, 20c is 200x200 µm. Their respective separation s is 50 µm so that the needed thickness of the waveguide 30 should be greater than 700 µm so that the light emitted by the first VCSEL array 20a does not intersect with the surface of the third VCSEL array 20c. The VCSEL arrays are realized on a substrate 2 that may be a Si substrate.

The thickness t of the waveguide, in the example of Fig.33, is 500 µm and its length L depends on the number of predetermined total internal reflections, typically 10 mm. The waveguide in the example of Fig.33 is made of a material having an index of refraction of 1.5.

The incouplers 40 a,b,c are reflective diffraction incouplers. In order to achieve an internal diffraction angle α of at least 45° the needed grating periods are 1367 nm, 1414 nm and 1461 nm for the VCSEL emission wavelengths of respectively 1450 nm, 1500 nm and 1550 nm. The outcoupler may have a grating period comprised between 1350 nm and 1480 nm. Preferably the grating outcoupler has a greater dimension than the lateral dimensions of the VCSEL arrays, for example 300x300 µm or greater.

In the exemplary realization the waveguide 30 is deposited directly on a substrate 2 and covers said VCSEL emitters 20a, 20b, 20c so that the waveguide 30 comprises a waveguide step portion WS, that is integral with the waveguide 30 and that is used as index adaptation layer as it is deposited directly on the emission surfaces ES of the VCSEL arrays. For reasons of clarity the guided light beams are shown as λ1, λ2 and λ 3 and the exact shape of the guided light beams are not illustrated. In a variant an adaptation layer may be arranged between said VCSEL emission surface and said index adaptation layer. In another variant the waveguide does not comprise a step as illustrated in Fig. 33, but has an index adaptation layer between said VCSEL arrays and said waveguide 30, and may be made of an index matching material such as a polymer.

In variants the waveguide may be made of SiO₂ or in a SWIR transparent polymer.

### Exemplary Applications

Autonomous vehicles are probably the most obvious area of application of the Lidar 1 of the present invention. It may also be used in other types of applications such as ground, airborne and space technology for intelligence, surveillance, military, security, machine vision or non-invasive clinical investigations such as optical coherence tomography.

Most minerals contain distinct absorption features in the SWIR, making this region of the spectrum the best candidate for spectroscopic analysis in many applications. Hydroxyl bearing minerals, sulfates, and carbonate materials produced naturally on earth - or directly related to human activities such as the burning of fossil fuels and the deforestation - are easily identified through SWIR spectroscopy. Multi/ hyper-spectral Lidar imaging can thus provide a powerful tool for mapping, archaeology, earth science, glaciology, agricultural assessment and disaster response.

The Lidar of the invention is also suitable to be adapted in a wearable Lidar systems such as a Lidar system comprising an armband or a belt. The Lidar system may be a watch comprising a Lidar. Such miniaturized Lidars may help to enhance considerably the mobility of disabled persons, in particular visually impaired or blind people. The user may obtain with such a wearable system, in real time, 3D information of its environment. The system may integrate warning signals, for example generated in Braille or other types of warming signals. Such wearable Lidar system may also be useful in environments wherein the visibility is very low, such as in the case of firefighting.

## Claims

1. A multi-wavelength Lidar (1) configured to emit and detected short wavelength infrared (SWIR) light comprising an emitter module (10) and a detector module (100) said emitter module (10) comprising an emitter platform (1a) and a light emitter (20) comprising at least two light emitters configured to emit each a light beam having a wavelength between 0.9 µm and 3 µm, said detector module (100) comprising at least one detector (110) configured to detect light having a wavelength between 0.9 µm and 3 µm,
wherein
- said emitter module (10) comprises at least one optical waveguide (30) comprising an array (40) of incouplers (40a), each of said incouplers (40a) facing at least one of said light emitters and being configured to incouple, in operation of said Lidar (1), into said waveguide (30) at least a guided portion (42a, 42b, 42c) of the light beams emitted by said emitters said waveguide (30) being configured to guide said portion (42a, 42b, 42c) by internal reflections in said waveguide (30),
- said waveguide (30) comprising at least one outcoupler (50) configured to couple out of said waveguide (30) at least one illumination beam (1000) comprising at least an outcoupled fraction of said guided portions (42a, 42b, 42c).

2. The multi-wavelength Lidar (1) according to claim 1 wherein at least one of said light emitters is a one dimensional or two-dimensional emitter array and wherein said light emitters are semiconductor light emitters.

3. The multi-wavelength Lidar (1) according to claim 2 wherein at least one of said light emitters is a vertical cavity surface emitting laser (VCSEL).

4. The multi-wavelength Lidar (1) according to any one of claims 1 to 4 wherein said emitter module (10) comprises n light emitters (22) and m outcouplers (50), m being smaller than n, and wherein, in operation of said Lidar (1), each of said m outcouplers (50) couples out of said waveguide (30) at least one outcoupled light beam (1001) comprising light provided by at least a fraction of all of said incoupled light beams (42a, 42b).

5. The multi-wavelength Lidar (1) according to any one of claims 1 to 4 wherein said emitter module (10) comprises n emitters (22) and m outcouplers (50), m being greater than n, and wherein, in operation of said Lidar(1), each of said m outcouplers (50) couples out of said waveguide (30) at least one outcoupled light beam (1001) comprising light provided by at least a fraction of all of said incoupled light beams (42a, 42b).

6. The multi-wavelength Lidar (1) according to any one of claims 1 to 5, wherein at least one of said waveguides (30) is a tapered waveguide.

7. The multi-wavelength Lidar (1) according to any one of claims 1 to 6 wherein at least one of said waveguides (30) is monolithically integrated on or in said emitter platform (2).

8. The multi-wavelength Lidar (1) according to any one of claims 1 to 7 wherein said detector module (100) comprises a wavelength dispersion layer (102).

9. The multi-wavelength Lidar (1) according to any one of claims 1 to 8 wherein said detector module (100) comprises a light beam redirecting layer (104).

10. The multi-wavelength Lidar (1) according to claim 8 and 9 wherein said wavelength dispersion layer (102) and/or said light beam redirecting layer (104) is a waveguide (130) comprising a plurality of incouplers and a plurality of outcouplers, one of said outcouplers facing at least one of said detector elements (110).

11. The multi-wavelength Lidar (1) according to any one of claims 1 to 10 comprising a waveguide (30) comprising a plurality of waveguide emitter portions (10a, 10b, 10c; 11a, 11b, 11c), said waveguide emitter portions (10a, 10b, 10c; 11a, 11b,11c) being defined as portions of said waveguide (30) comprising at least two emitters facing each an incoupler and comprising at least one outcoupler (50), and wherein said waveguide emitter portions (10a, 10b, 10c; 11a, 11b, 11c) are configured to emit, in operation, different shaped illumination beams (1001, 1003, 1005; 1002, 1004, 1006) configured so that in operation, targets situated at different distances relative to said Lidar (1) may be illuminated by said illumination beams (1001, 1003,1005; 1002, 1004, 1006).

12. The multi-waveguide Lidar (1) according to any one of claims 1 to 11 least one of said incouplers (42) and/or said at least one outcoupler (50) is a diffraction grating.

13. The multi-waveguide Lidar (1) according to any one of claims 1 to 12 wherein the absorbing layer (180) of at least one of said detectors is made of Ge₁₋ₓSnₓ and wherein x which is higher than 0.03 and lower than 0.12.

14. The multi-waveguide Lidar (1) according to any one of claims 1 to 13 wherein the absorbing layer of at least one of said detectors (180) is made of SiₓGe_{1-x-z}Sn_{z} and wherein the Si content x is higher than 0.06 and lower than 0.2.

15. The multi-waveguide Lidar (1) according to any one of claims 1 to 14 wherein said waveguide (30, 130) is an optical fiber or an optical fiber bundle (300).

16. A wearable short wavelength infrared Lidar system 3, comprising at least one Lidar 1 according to any one of claims 1 to 15, comprising a support 6 and comprising electronic and data handling means that are configured to provide information and/or warning signals 3000, 3000' to a person wearing said wearable short wavelength infrared Lidar system.
